# EUROPÄISCHE PATENTSCHRIFT

(11) **EP 3 380 814 B1**
(45) Veröffentlichungstag und Bekanntmachung des Hinweises auf die Patenterteilung: **11.01.2023**
(21) Anmeldenummer: 16806001.0
(22) Anmeldetag: 25.11.2016
(51) Int. Cl.: G01D 11/26

(54) **EXPLOSIONSGESCHÜTZTES GEHÄUSE FÜR MITTEL ZUM SENDEN UND EMPFANGEN ELEKTROMAGNETISCHER STRAHLUNG**
EXPLOSION-PROTECTED HOUSING FOR MEANS FOR TRANSMITTING AND RECEIVING ELECTROMAGNETIC RADIATION
BOÎTIER PROTÉGÉ CONTRE LES EXPLOSIONS POUR MOYENS D'ÉMISSION ET DE RÉCEPTION DE RAYONNEMENT ÉLECTROMAGNÉTIQUE

(30) Priorität: 25.11.2015 DE 102015223362
(43) Veröffentlichungstag der Anmeldung: 03.10.2018
(73) Patentinhaber: Minimax GmbH, 23843 Bad Oldesloe (DE)
(72) Erfinder: ZIEMS, Bernd, 23619 Zarpen (DE); DITTMER, Hauke, 23769 Fehmarn (DE); SIEMER, Dirk, 23847 Rethwisch (DE); GROTHOFF, Axel, 24539 Neumünster (DE); ZÜLZER, Peter, 22391 Hamburg (DE); STAMER, Arne, 23847 Siebenbäumen (DE); WISNIEWSKI, Pawel, 23816 Neversdorf (DE); ZIEGENBEIN, Timo, 22964 Mollhagen (DE)
(74) Vertreter: Eisenführ Speiser
(86) Internationale Anmeldenummer: PCT/EP2016/078827
(87) Internationale Veröffentlichungsnummer: WO 2017/089550

(56) Entgegenhaltungen:
- WO-A2-2007/025083
- CN-U- 204 758 574
- DE-A1- 2 114 449
- DE-A1- 19 608 543
- DE-A1-102008 010 207
- JP-A- 2013 117 439
- US-A- 4 977 418
- US-A1- 2015 277 112

## Beschreibung

Die vorliegende Erfindung betrifft ein explosionsgeschütztes Gehäuse für Mittel zum Senden und/oder Empfangen elektromagnetischer Strahlung, mit einem Gehäusekörper, der zur Aufnahme solcher Sende- und/oder Empfangsmittel eingerichtet ist, und einem Fensterelement mit einer ersten, dem Gehäuseinneren zugewandten Seite und einer gegenüberliegenden zweiten, dem Gehäuseinneren abgewandten Seite, wobei das Fensterelement gegenüber elektromagnetischer Strahlung durchlässig ist.

In der Messtechnik, insbesondere in der Sicherheitstechnik, wie beispielsweise bei der Erfassung von Gefahrkenngrößen wie toxische Gase, Brandgase, sowie elektromagnetische Strahlung, Flammen und Funken, werden elektronische Detektionsgeräte, beispielsweise Brandmelder wie Flammenmelder, Funkenmelder, Gasmelder und andere Geräte an Umgebungen und an Orten eingesetzt, wo Explosionsgefahr besteht.

Beispiele für solche Umgebungen und Orte, an denen explosive Gase oder Stäube auftreten können, sind Getreidemühlen, Mehlsilos, Chemieanlagen, Tanklager, Bergwerke, Raffinerien, Ölplattformen, Bohr- und Tankschiffe, Lackierkabinen, Gasverdichterstationen, Holzverarbeitende Betriebe, Papierfabriken und Kläranlagen.

Elektronische Detektionsgeräte, die in explosionsgefährdeten Bereichen einsetzbar sind, müssen besondere Sicherheitsanforderungen erfüllen. Diese haben das Ziel entweder eine Zündquelle, die ggf. eine Explosion auslösen könnte, auszuschließen oder zu verhindern, dass eine im Inneren des abgeschlossenen Volumens des Gerätegehäuses entstehende Explosion Auswirkungen auf die Umgebung hat.

Dieses Ziel ist auf verschiedene Arten erreichbar, die in entsprechenden europäischen und internationalen Normen als Zündschutzarten bezeichnet werden.

Anforderungen für die Vermeidung einer Zündquelle werden beispielhaft durch die Normen IEC 60079-11 und EN 60079-11 gegeben. Die Zündschutzart hierfür hat den Namen "Eigensicherheit" (Ex-i). Diese wird erreicht, wenn die elektrischen Größen Strom, Spannung und Leistung in dem Gerät immer unterhalb eines vorgegebenen Grenzwertes liegen. Die Grenzwerte müssen so gewählt werden, dass auch im Fehlerfall, beispielsweise durch einen Kurzschluss, keine zündfähige Quelle, wie zum Beispiel ein Funke oder eine heiße Oberfläche, erzeugt wird.

Werden keine Maßnahmen getroffen, um die Anforderungen zur Eigensicherheit zu erfüllen, kann man beispielsweise das Gehäuse des Gerätes in der Zündschutzart "Druckfeste Kapselung" (Ex-d) ausbilden. Diese Zündschutzart ist in den Normen IEC 60079-1 und EN 60079-1 beschrieben.

Geräte, die gemäß der Zündschutzart "Druckfeste Kapselung" (Ex-d) ausgebildet sind, weisen ein druckfestes Gehäuse auf, welches gewährleistet, dass eine im Inneren des Gehäuses auftretende Explosion nicht in die Umgebung, nicht in den Raum oder den Bereich des Montageortes des Gehäuses übertragen werden kann. Dies bedeutet, mit anderen Worten, dass beim Auftreten einer inneren Explosion das Gehäuse nicht beschädigt werden darf und das ein Übertritt der Explosion über die Wand oder einen Spalt des Gehäuses hinaus in die äußere Umgebung des Gehäuses verhindert wird. Ein Gehäuse, das so ausgebildet ist und diesen Anforderungen genügt, insbesondere durch Zulassungen nach den Normen IEC 60079-1 oder EN 60079-1, wird hier und im Folgenden als druckfestes Gehäuse bezeichnet. Ein druckfestes Gehäuse ist somit ein Gehäuse, ausgebildet in der Zündschutzart druckfeste Kapselung Ex-d zur Anwendung im explosionsgefährdeten Bereich für Gase.

Verbindungen von Gehäuseteilen und sich konstruktiv ergebende Spalte müssen zünddurschlagsicher ausgebildet sein, um die oben genannten Normen zu erfüllen. Eine zünddurchschlagsichere Verbindung und ein zünddurchschlagsicherer Spalt gewährleisten, dass eine im Inneren des Gehäuses auftretende Explosion nicht in die Umgebung, nicht in den Raum oder den Bereich des Montageortes des Gehäuses übertragen werden kann.

Bei der Zündschutzart "Schutz durch Gehäuse", Ex-t, beruht das Schutzkonzept auf dem Einsatz staubgeschützter Gehäuse mit der Schutzart IP 5X und staubdichter Gehäuse mit der Schutzart IP 6X, zusammen mit der Begrenzung der Oberflächentemperatur des Betriebsmittels, so dass sich die äußere Staubatmosphäre nicht entzünden kann. Die Geräte werden einer IP-Schutzartprüfung unterzogen.

Wenn im Zusammenhang mit der Erfindung von "Schutzart IP...", so ist hiermit die IP-Code Klassifizierung, bspw. nach DIN EN 60529 (VDE 0470-1):2014-09, gemeint.

Die Geräte müssen zudem einer Umweltprüfung z. B. gemäß IEC 60079-0 und IEC 60079-31 unterzogen werden. Die Umweltprüfungen beinhalten unter anderem eine Wärme- und Kältebeständigkeitsprüfung bei Kunststoffgehäuseteilen, eine Stoß- und Schlagprüfung, sowie eine Druckprüfung. Betriebsmittel dieser Zündschutzart müssen den Anforderungen beispielsweise der Norm IEC 60079-31 genügen.

Durch das staubdichte Gehäuse wird verhindert, dass ein brennbarer Staub in das Gehäuse eindringen und dort entzündet werden könnte. Elektrisch leitfähiger Staub, wie beispielsweise Metallstaub, wird durch die staubdichte Ausführung des Gehäuses abgehalten und kann damit nicht zu gefährlichen Überhitzungen durch Kurzschlüsse bzw. elektrische Übergangswiderstände führen.

Ein Gehäuse, das ausgebildet ist die Zündschutzart "Schutz durch Gehäuse", Ex-t zu erfüllen, insbesondere durch Zulassungen nach den Normen IEC 60079-31 oder EN 60079-31, wird hier und im Folgenden als staubdichtes Gehäuse bezeichnet. Ein staubdichtes Gehäuse ist somit ein Gehäuse, ausgebildet in der Zündschutzart "Schutz durch Gehäuse" Ex-t zur Anwendung im explosionsgefährdeten Bereich für Staub.

Explosionsgeschützte Gehäuse mit einem Fensterelement, für Mittel zum Senden bzw. Empfangen elektromagnetischer Strahlung, sind grundsätzlich bekannt.

So offenbart DE202006014464 ein druckfestes Gehäuse mit einem als transparenten Festkörper ausgebildeten Fensterelement einer optischen Baugruppe zum Ein- und/oder Auskoppeln von elektromagnetischer Strahlung. Der transparente Festkörper wird in einer druckfesten Vergussmasse gehalten.

DE 21 14 449 A1 betrifft ein Lasergerät in schlagwetter- und explosionsgefährdeten Betrieben. Das Lasergerät umfasst ein Gehäuse, das an einem Ende von einem optischen Linsensystem verschlossen ist. Die Linsen des Linsensystems sind mittels ringförmiger Aufnahmen gehalten oder mittels Innen- bzw. Außengewinde aufweisender Sicherungsringe im Gehäuse festgesetzt.

Ferner ist aus US 4,977,418 A oder WO 2007/025083 A2 jeweils eine explosionssichere Kameraanordnung mit einem wetter- und explosionssicheren Gehäuse bekannt. Das Gehäuse ist an einer Seite, welche eine Schrauböffnung aufweist, durch einen schraubbaren ein Fenster aufweisenden Deckel verschließbar.

DE 10 2008 010 207 A1 offenbart eine optische Baugruppe mit einer Sammellinse zum Ein- und/oder Auskoppeln elektromagnetischer Strahlung in ein oder aus einem druckfesten Gehäuse. Die Sammellinse wird zwischen einem Fassungsring am Gehäuse und einem Vorschraubring festgesetzt.

Nachteilig an solchen Gehäusen aus dem Stand der Technik sind hohe Herstellkosten. Ferner sind im Stand der Technik mehrere Bauteile notwendig, um das Fensterelement verliersicher und druckfest, mit anderen Worten zünddurchschlagsicher am Gehäuse anordnen zu können. Ein Austausch des Fensterelementes bzw. eines Gehäuseteils mit Fensterelement ist ferner nicht oder nur mit hohem Aufwand möglich.

Die vorstehenden Definitionen, insbesondere zu den Begriffen der Zünddurchschlagssicherheit, Staubdichtheit, und zum Explosionsschutz, gelten auch für die im Folgenden erläuterte Erfindung und die erfindungsgemäßen Ausführungsformen.

Der Erfindung lag somit die Aufgabe zugrunde, ein explosionsgeschütztes Gehäuse der eingangs bezeichneten Art dahingehend zu verbessern, dass die vorstehend benannten Nachteile möglichst weitgehend vermindert werden. Insbesondere lag die Aufgabe zugrunde die Herstellkosten zu senken, ohne die Zündschutzart, insbesondere die Ausführung als druckfestes Gehäuse zu kompromittieren und zusätzlich ein hohes Maß an Flexibilität beim Einsatz solcher Gehäuse, und insbesondere bei Wartung und Instandhaltung, zu gewährleisten.

### Geänderte Beschreibungsseiten (mit Änderungen)

Die Erfindung löst diese Aufgabe für ein explosionsgeschütztes Gehäuse der eingangs genannten Art gemäß einem ersten Aspekt, indem der Gehäusekörper auf der zweiten Seite des Fensterelements eine Bördelung aufweist, welche durch mechanisches Umbiegen einer am Gehäusekörper vorgesehenen Metallkante nach Einsetzen des Fensterelementes in den Gehäusekörper erzeugt wird, und das Fensterelement in Richtung eines im Inneren des Gehäuses ausgebildeten Sitzes drückt, so dass das Gehäuse als druckfestes, explosionsgeschütztes Gehäuse ausgebildet ist. Vorzugsweise ist der Sitz im Inneren des Gehäusekörpers angeordnet. Weiter vorzugsweise ist der Sitz einstückig mit dem Gehäusekörper ausgeschildert. Insbesondere ist der Sitz als Vorsprung der inneren Wandlung des Gehäusekörpers ausgebildet. Hierdurch wird die Montage weiter vereinfacht, da die Bauteilzahl reduziert werden kann.

Die Bördelung zur mechanischen Halterung des Fensterelementes wird verstanden als ein metallisches Klemmelement, erzeugt durch das mechanische Umbiegen, insbesondere mittels Kaltverformen, einer an dem Gehäusekörper vorgesehenen Metallkante mit einem geeigneten Werkzeug, z. B. einer walzenförmigen Rolle oder einer Kugel. Vorteilhaft an diesem Verfahren ist die Erhöhung der Festigkeit durch die Kaltverformung des Metalls. Die Metallkante ist im Rohzustand des Gehäusekörpers vordem Bördeln vorzugsweise als Verjüngung, insbesondere als Fase oder als axial vorstehender Ringabschnitt ausgebildet. Ein weiterer Vorteil ist, dass durch den geringen Materialeinsatz der Bördelung nur eine schmale Abdeckung im Randbereich des Fensterelementes erfolgt, so dass eine freie unverdeckte Fensterfläche Au für den Durchlass der elektromagnetischen Strahlung erreicht wird. Ferner wird durch die Ausführung der Bördelung erreicht, dass eine geringe Angriffsfläche für Verschmutzungen am Fensterelement vorliegt.

Durch die Bördelung wird eine kosteneffiziente Herstellung ermöglicht, da keine weiteren Teile oder Gehäuseteile oder andere Maßnahmen zur Gewährleistung der zünddurchschlagsicheren Verbindung des Fensterelements mit dem Gehäusekörper notwendig sind.

Vorzugsweise ist das Fensterelement für elektromagnetische Strahlung im Wellenlängenbereich 0,15 µm bis 15,0 µm, besonders bevorzugt 1 µm bis 6 µm durchlässig.

Die Transmission für den bevorzugten Wellenlängenbereich ist vorzugsweise größer als 80%. Um einen großen Sichtbereich gewährleisten zu können, hat das Material des Fensterelementes einen möglichst geringen Brechungsindex, vorzugsweise kleiner als 1,5.

Gemäß einer besonders bevorzugten Weiterbildung der Erfindung ist zwischen dem Sitz und der ersten Seite des Fensterelements und/oder zwischen der Bördelung und der zweiten Seite des Fensterelements (jeweils) ein elastisches Dichtungselement angeordnet. Mittels der Bördelung werden hierbei der Gehäusekörper, das Fensterelement und das oder die Dichtungselemente staubdicht, sowie vorzugsweise wasser- und/oder luftdicht, miteinander in Anlage gehalten. Als wasserdicht wird hierbei die Schutzart IP67 oder besser angesehen. Die Verbindung des Fensterelements mit dem Gehäuse und der vorzugsweise hierbei gebildete Spalt sind vorzugsweise zünddurchschlagsicher ausgebildet.

Durch das oder die elastischen Dichtungselemente wird es ermöglicht, dass die Energie von Schlagimpulsen auf das Fensterelement abgeschwächt oder absorbiert wird. Die Größe des Fensterelements, insbesondere die Dicke, welche den Abstand der ersten und der zweiten Seite des Fensterelements vorgibt, sowie die Materialart des Fensterelements und die Elastizität des oder der Dichtungselemente sind so ausgebildet, dass das Fensterelement der Einwirkung einer Schlagenergie von 2 J bis 7 J (Joule) widersteht. Abhängig von der Fläche des Fensterelementes, liegt die Schlagenergie besonders bevorzugt bei 2 J oder 4 J. Eine Schlagenergie von 2 J wird beispielsweise angenommen, wenn die zu schützende Fläche kleiner als 2500 mm² ist. Das Fensterelement muss vorzugsweise einer senkrecht herabfallenden Prüfmasse von 1 kg ohne Zerstörung wiederstehen. Diese Schlagprüfung wird beispielsweise in der Norm IEC 60079-0 mit einer Prüfmasse von 1 kg und einer Stahlkugel mit 25 mm Durchmesser als Aufschlagfläche durchgeführt, wobei die Stahlkugel unter der Prüfmasse sitzt und die Fensterfläche beim Aufschlag berührt.

Die Dichtigkeit wird in der Umweltprüfung, nach der Schlagprüfung überprüft und muss mindestens der Schutzart IP5x entsprechen, bspw. nach IEC60529. In einer besonders bevorzugten Ausführung beträgt die Staubdichtigkeits-Schutzart nach dem Schlagimpuls IP6x.

Gemäß einer weiteren Ausgestaltung, die eine bevorzugte Ausführungsform des ersten Aspekts des eingangs genannten Gehäuses ist, weist das Fensterelement eine Umfangsfläche auf, die sich von der ersten Seite zur zweiten Seite erstreckt, und mittels eines elastischen Haftmittels am Gehäuse befestigt ist, wobei das elastische Haftmittel zwischen der ersten Seite des Fensterelements und einem im Inneren des Gehäusekörpers ausgebildeten Sitz, und zwischen der Umfangsfläche und einer inneren Wandung des Gehäusekörpers angeordnet ist, und das Fensterelement und das elastische Haftmittel das Gehäuse staubdicht, sowie vorzugsweise wasser- und/oder luftdicht, verschließen.

Die Elastizität des Haftmittels ermöglicht, dass die Energie von Schlagimpulsen auf das Fensterelement abgeschwächt oder absorbiert wird. Hinsichtlich einer bevorzugten Ausgestaltung des Fensterelements, insbesondere hinsichtlich der Größe, der Dicke, welche den Abstand der ersten und der zweiten Seite des Fensterelements vorgibt, sowie der Materialart des Fensterelements und der Elastizität des Haftmittels wird auf die vorstehenden Ausführungen zum ersten Aspekt verwiesen. Das elastische Haftmittel trägt dazu bei, dass die Verbindung des Fensterelements mit dem Gehäusekörper zünddurchschlagsicher ausgebildet ist. Dies ist eine sehr einfache und kostengünstige Lösung zur Herstellung solcher Gehäuse.

Vorzugsweise ist das Gehäuse als druckfestes Gehäuse und/oder als staubdichtes Gehäuse ausgebildet. Das Gehäuse ist vorzugsweise in der Zündschutzart druckfeste Kapselung Ex "d" zur Anwendung im Gas-Ex-Bereich und/oder in der Zündschutzart Schutz durch Gehäuse Ex "t" zur Anwendung im Staub-Ex-Bereich ausgebildet.

Vorzugsweise ist das elastische Haftmittel ein silikonhaltiges Elastomer. Dieses bringt den Vorteil mit sich, dass es in einem großen Temperaturbereich hoch elastisch, sowie resistent gegen eine Vielzahl von Chemikalien ist.

Die oben genannten Ausführungen zum staubdichten sowie wasser- und/oder luftdichten Verschließen gelten auch für diesen zweiten Aspekt der Erfindung.

Vorzugsweise weist der Gehäusekörper eine Innenwand im Bereich des Fensterelements auf. Zwischen dem Fensterelement und der Innenwand ist ein Spalt zünddurchschlagsicher ausgebildet. Somit ist er derart gestaltet, dass er die Ausbreitung einer Flamme von einer Explosion im Inneren, über die Gehäusewand hinaus, verhindert.

Vorzugsweise weist der Spalt bei einem Gehäusevolumen von weniger als 100 cm³ eine Spaltlänge von mindestens 6 mm und eine Spaltweite von 0,1 mm oder weniger auf.

In einer bevorzugten Ausgestaltung weist das Fensterelement eine zylindrische Umfangsfläche auf. Der Gehäusekörper weist eine korrespondierend ausgebildete Ausnehmung zur Aufnahme des Fensterelements auf. Die Ausbildung des Fensterelements als zylindrische Scheibe und der Ausnehmung als kreisförmige Aufnahme sind besonders kostengünstig herzustellen. Zusätzlich ermöglicht diese Form einen gleichmäßigen Öffnungskegel bzw. Öffnungswinkel des Mittels zum Empfang elektromagnetischer Strahlung.

Gemäß einer weiteren Ausgestaltung weist der Gehäusekörper ein erstes Gehäuseteil und ein zweites Gehäuseteil auf, wobei das erste Gehäuseteil das Fensterelement umfasst, und das zweite Gehäuseteil zur Aufnahme der Sende- bzw. Empfangsmittel ausgebildet ist.

Hierbei ist es bevorzugt, dass das erste Gehäuseteil mittels einer zünddurchschlagssicheren Verbindung reversibel lösbar mit dem zweiten Gehäuseteil verbunden ist, wobei bevorzugt die zünddurchschlagsichere Verbindung ein erstes Verbindungselement, vorzugsweise ein Innen- oder Außengewinde, an dem ersten Gehäuseteil und ein korrespondierendes zweites Verbindungselement, vorzugsweise ein Außen- oder Innengewinde, an dem zweiten Gehäuseteil aufweist.

In einer weiteren besonders bevorzugten Ausführung ist das erste Gehäuseteil mit dem Fensterelement als Wechseloptik ausgebildet. Bei Verschmutzung oder Verschleiß des Fensterelements, insbesondere der zweiten Seite, die der Umgebung des Gehäuses zugewandt ist, ist somit ein schneller Wechsel durch das Servicepersonal möglich, unter Beibehaltung der Ausbildung des Gehäuses als druckfestes Gehäuse und/oder staubdichtes Gehäuse.

Unter reversibler Lösbarkeit wird hierbei insbesondere verstanden, dass es möglich ist, zerstörungsfrei eine Vielzahl von Trennungen und erneuten Verbindungen der Verbindungsmittel herbeizuführen.

Insbesondere für die Ausführungsformen mit einem ersten und einem zweiten Gehäuseteil ist es vorteilhaft, dass sie eine kantenfreie, vorzugsweise zylindrische Außenfläche haben, die als Sonderwerkzeugangriffsfläche dient. Bevorzugt wird diese Ausführung, da ein Schutz gegen unbefugtes Öffnen mittels allgemein erhältlicher Mehrkant-Werkzeuge (bspw. Vierkant, Sechskant etc.) geschaffen wird. Vorzugsweise wird zum Lösen und Befestigen der Verbindung ein Sonderwerkzeug zum Einsetzen von zylindrischen Rohr- und Gewindekörpern, auch bezeichnet als Super-Nuss, oder ähnliches Werkzeug verwendet.

Gemäß einer weiteren bevorzugten Ausgestaltung umfassen die Empfangsmittel für elektromagnetische Strahlung eine Sensoreinheit und eine Sensorsignalauswerteeinheit. Als Sensoreinheit wird hier sowohl eine elektromagnetische Strahlung empfangende, als auch sendende Einheit verstanden. Vorzugsweise sind hierbei die Sensoreinheit und Sensorsignalauswerteeinheit dazu eingerichtet, elektromagnetische Strahlung im Wellenlängenbereich 0,15 µm bis 15 µm zu detektieren. Funken und Flammen strahlen charakteristische elektromagnetische Strahlung im Wellenlängenbereich 0,15 µm bis 15 µm aus.

In einer weiteren bevorzugten Ausgestaltung besteht der Körper des ersten Gehäuseteils und/oder des zweiten Gehäuseteils aus einem der folgenden Materialien: Metall, vorzugsweise Edelstahl, Keramik, Kunststoff, faserverstärktem Kunststoff, vorzugsweise CFK oder GFK, oder aus einer Kombination mehrerer dieser Materialien.

Vorzugsweise werden das erfindungsgemäße Gehäuse, der Gehäusekörper oder das erste Gehäuseteil und/oder das zweite Gehäuseteil als Drehteil aus Edelstahl ausgebildet. Das erste zylindrische Gehäuseteil aus Edelstahl ist hierbei als Fassung für das Fensterelement, welches die Form einer zylindrischen Scheibe hat, ausgebildet.

Vorzugsweise weist das erfindungsgemäße Gehäuse ein freies Innenvolumen von maximal 100 cm³, besonders bevorzugt für eine kompakte Bauweise von maximal 10 cm³ auf.

Das Gehäuse ist vorzugsweise zur Reduktion des freien Gehäusevolumens teilweise oder vollständig vergossen. Hierdurch werden Umwelteinflüsse, wie Feuchtigkeit, aggressive Gasatmosphären etc. von den Einbauteilen im Gehäuseinneren abgehalten und das Volumen einer zündfähigen Gasatmosphäre reduziert.

Das erste Gehäuseteil weist vorzugsweise eine Innenwand im Bereich des Fensterelements auf, und zwischen dem Fensterelement und der Innenwand ist ein Spalt ausgebildet, der zünddurchschlagsicher ausgebildet ist. Somit ist er derart gestaltet, dass er die Ausbreitung einer Explosion aus dem Gehäuseinneren über die Gehäusewand hinaus nach außen verhindert. Vorzugsweise ist der Spalt zylindrisch ausgebildet.

Der zylindrische Spalt ist hierzu so ausgebildet, dass er vorzugsweise eine Mindestlänge von 6 mm und eine maximale Spaltweite von 0,1 mm aufweist.

In einer bevorzugten Ausgestaltung ist das Fensterelement durchlässig für elektromagnetische Strahlung im Wellenlängenbereich von 0,15 µm bis 15 µm oder im bevorzugten Bereich von 1 µm bis 6 µm. Vorzugsweise ist das Fensterelement aus Saphir, Kunststoff, Borosilikatglas, insbesondere Borosilikat-Kronglas mit Brechungsindex 7, eingefärbtem Glas, Silizium, oder Quarzglas, oder einer Kombination aus mehreren dieser Materialien ausgebildet ist.

In einer weiteren bevorzugten Ausgestaltung weist der Gehäusekörper im Bereich des Fensterelements einen zylindrischen Querschnitt mit einer Querschnittsfläche A auf, und eine von der Bördelung des Fensterelements unverdeckte Fensterfläche A_{U}, die 80% oder mehr der Querschnittsfläche A beträgt. Dies ermöglicht eine maximale Eintrittsfläche für die in das Gehäuse einzukoppelnde und/oder auszukoppelnde elektromagnetische Strahlung und damit einen maximalen Öffnungswinkel für die Sensoreinheit. Ein weiterer

### Geänderte Beschreibungsseiten (Reinschrift)

Vorteil dieser Lösung ist, dass der Materialverbrauch für das Fensterelement minimiert wird, im Vergleich zu Lösungen, wo das Fensterelement durch die fixierenden Teile mehr abgedeckt wird.

Die Sensoreinheit ist in der von der zweiten Seite des Fensterelements um H beabstandeten Empfangsebene angeordnet. Der Durchmesser der Fläche Au und der Abstand H bestimmen die Größe des Öffnungswinkels a, der bei vorgegebenem Abstand H umso größer ist, je größer die Fläche Au ist. Hierbei ist es vorteilhaft, dass das Innere des Gehäusekörpers und seine Komponenten im Inneren so ausgebildet sind, dass nach Durchtritt der elektromagnetischen Strahlung durch die erste Seite des Fensterelements, diese ungehindert die Empfangsebene mit der Fläche Au erreicht. Gemäß einer bevorzugten Ausführung ist der Öffnungswinkel größer als 90 Grad, vorzugsweise120 oder 140 Grad.

Die Signal-/Energiezuführung in das druckfeste Gehäuse ist vorzugsweise mittels einer Kabeleinführung ausgebildet, die mit einem zünddurchschlagsicheren Gewinde in den Gehäusekörper eingesetzt ist, oder mittels einer geeigneten Bohrung durch eine Wand des Gehäusekörpers, die vorzugsweise durch Verguss im Inneren druckfest abgedichtet ist.

Die Erfindung spiegelt sich nicht nur im explosionsgeschützten Gehäuse mit seinen Einzelelementen, sondern auch in der modularen Kombination dieser Einzelelemente wieder.

Somit betrifft die Erfindung in einem zweiten Aspekt ein explosionsgeschütztes Gehäuse-Kit, mit einem explosionsgeschützten Gehäuse nach einer der vorstehend beschriebenen bevorzugten Ausführungsformen mit dem ersten Gehäuseteil und dem zweiten Gehäuseteil, wobei vorzugweise das erste Gehäuseteil das Fensterelement umfasst, und das zweite Gehäuseteil zur Aufnahme der Sende- bzw. Empfangsmittel ausgebildet ist, und ferner mit
- einem oder mehreren weiteren ersten Gehäuseteilen, die als Wechseloptiken bereitgehalten werden und vorzugsweise jeweils zu den Übrigen unterschiedlich ausgebildete Fensterelemente aufweisen, und/oder
- einem oder mehreren weiteren zweiten Gehäuseteilen, die jeweils, vorzugsweise zu den Übrigen unterschiedlich ausgebildete, Sende- bzw. Empfangsmittel für elektromagnetische Strahlung aufweisen und als Wechselsendeeinheiten und/oder Wechselempfangseinheiten bereitgehalten werden.

Die bevorzugten Ausführungsformen des ersten Aspekts sind zugleich bevorzugte Ausführungsformen des zweiten Aspekts. Die bevorzugten Ausführungsformen des dritten Aspekts der Erfindung sind zugleich bevorzugte Ausführungsformen des ersten Aspekts der Erfindung.

Der zweite Aspekt der Erfindung und alle Ausgestaltungsvarianten mit der Ausgestaltung des Gehäusekörpers mit dem ersten Gehäuseteil und dem zweiten Gehäuseteil haben den Vorteil, dass ein modulares Plattformkonzept bereitgestellt wird, mittel dessen verschiedene erste Gehäuseteile, die sich in der Transmissivität und/oder den mechanischen Eigenschaften des Fensterelements, insbesondere hinsichtlich der durchgelassenen Wellenlänge unterscheiden, mit zweiten Gehäuseteilen kombinieren kann, die jeweils verschiedene, der Mess- oder Überwachungsaufgabe angepasste Sende- und/oder Empfangsmittel für elektromagnetische Strahlung aufweisen. Weiterhin verbessern die Flexibilität und die Einfachheit des Auswechselns von diesen Gehäuseteilen die Umrüsteffizienz für das Servicepersonal und erlauben eine zügige Konfektionierung der Gehäuse direkt am Montageort. Somit können baugleiche explosionsgeschützte Gehäuse mit baugleichen Gehäuseteilen für unterschiedliche Anwendungen verwendet werden, was die Herstellkosten wesentlich reduziert.

Als besonderer Vorteil derjenigen Ausführungsform, bei der das erste Gehäuseteil mit dem Fensterelement als Wechseloptik ausgebildet ist, kann die Wechseloptik bei Verschmutzung oder Verschleiß des Fensterelements sehr flexibel und kosteneffizient getauscht werden, ohne die Staubschutzfunktion bzw. Druckdichtheit des Gehäuses zu kompromittieren. Eine bevorzugte Verwendung liegt beispielsweise in der Überwachung eines pulverförmigen oder partikelförmigen Materialstroms, bei welcher gerade die Wechseloptik besonders beansprucht und Verschmutzungen ausgesetzt ist.

Die Erfindung betrifft in einem weiteren Aspekt ein Verfahren zur Herstellung eines explosionsgeschützten Gehäuses oder Teils eines Gehäuses für Mittel zum Senden und/oder Empfangen elektromagnetischer Strahlung gemäß dem ersten Aspekt der Erfindung.

Die Erfindung löst die eingangs bezeichnete Aufgabe, indem das Verfahren die folgenden Schritte umfasst:
- Herstellen oder Bereitstellen eines Gehäusekörpers, der eine Längsachse, ein Gehäuseinneres zur Aufnahme solcher Sende- und/oder Empfangsmittel, einen im Inneren des Gehäusekörpers ausgebildeten Sitz für ein Fensterelement, und eine in Richtung der Längsachse vom Gehäusekörper vorstehende metallische Kante aufweist, insbesondere ausgebildet als Fase oder ringförmiger Vorsprung,
- Herstellen oder Bereitstellen eines Fensterelements,
- Einsetzen des Fensterelements in das Innere des Gehäusekörpers an der Seite des Sitzes, und
- Bördeln der metallischen Kante durch mechanisches Umbiegen einer am Gehäusekörper vorgesehenen Metallkante derart, dass die gebördelte Kante das Fensterelement gegen den Sitz im Inneren des Gehäusekörpers drückt.

Das erfindungsgemäße Verfahren wird vorteilhaft weitergebildet, indem vor dem Einsetzen des Fensterelements in das Innere des Gehäusekörpers ein, vorzugsweise elastisches, Dichtelement an der Seite des Sitzes eingesetzt wird, wobei das Dichtelement mittels des Bördelns in dichtende Anlage mit dem Sitz einerseits und dem Fensterelement andererseits gebracht wird.

Das Gehäuse bzw. der Gehäusekörper ist vorzugsweise nach einer der hierin beschriebenen bevorzugten Ausführungsformen des ersten oder zweiten Aspekts ausgebildet und vorzugsweise zur Verwendung in einem Kit gemäß dem dritten Aspekt der Erfindung vorgesehen.

Die Erfindung wird im Folgenden unter Bezugnahme auf die beigefügten Figuren anhand mehrerer bevorzugter Ausführungsbeispiele näher beschrieben. Hierbei zeigen:
- Figur 1: eine schematische Darstellung eines explosionsgeschützten Gehäuses einer bevorzugten Ausführung,
- Figur 2: eine vergrößerte schematische Darstellung eines Ausschnitts des Gehäusekörpers gemäß Fig. 1 mit der Anordnung des Fensterelements mit Bördelung,
- Figur 3: eine schematische Darstellung eines Ausschnitts des Gehäusekörpers mit der Anordnung des Fensterelements gemäß Figur 1 und 2 mit elastischem Haftmittel,
- Figur 4: eine schematische Darstellung eines ersten Gehäuseteils für eine zweiteilige Ausführung des Gehäusekörpers,
- Figur 5: eine schematische Darstellung der unverdeckten Fensterfläche A_{U},
- Figur 6a bis 6c: eine schematische Übersichtsdarstellung eines explosionsgeschützten Gehäuse-Kits und
- Figur 7: eine schematische Darstellung einer Aufnahme für das Gehäuse.

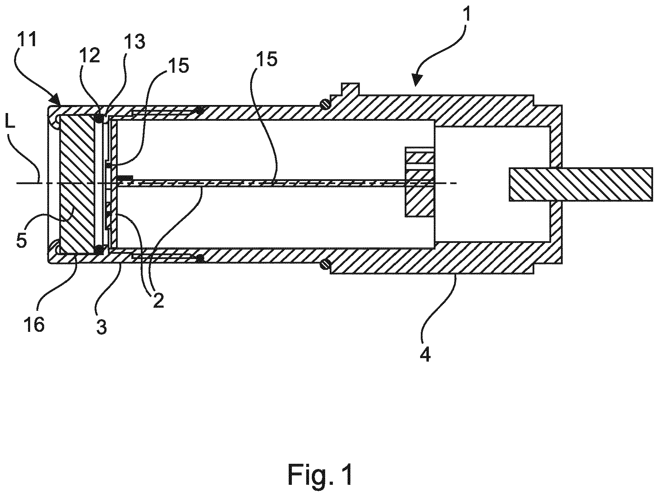

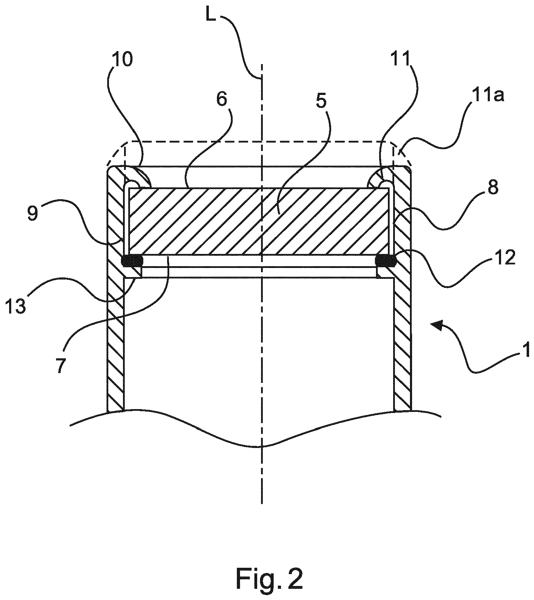

Figur 1 zeigt ein explosionsgeschütztes Gehäuse gemäß einem ersten bevorzugten Ausführungsbeispiel der Erfindung. Das explosionsgeschützte Gehäuse weist einen Gehäusekörper 1 auf, der zur Aufnahme von Mitteln zum Senden und/oder Empfangen 2 elektromagnetischer Strahlung eingerichtet ist. Weiterhin weist das Gehäuse ein Fensterelement 5 auf. Das Fensterelement 5 hat zwei Seiten, eine erste, dem Gehäuseinneren zugewandten Seite 7 und eine gegenüberliegenden zweite, dem Gehäuseinneren abgewandte Seite 6 (s. Fig. 2). Das Fensterelement 5 ist in diesem Ausführungsbeispiel für elektromagnetische Strahlung, vorzugsweise im Wellenlängenbereich 1 µm bis 6 µm durchlässig.

Ein Ausschnitt des Gehäusekörpers ist in Fig. 2 dargestellt. Der Gehäusekörper 1 weist auf der zweiten Seite 6 des Fensterelements 5 eine Bördelung 11 auf, welche nach innen zum Fensterelement 5 hin umgebogen ist und das Fensterelement 5 in Richtung eines im Inneren des Gehäuses ausgebildeten Sitzes 13 drückt, so dass das Gehäuse, wie es in Figur 1 dargestellt als druckfestes Gehäuse und/oder als staubdichtes Gehäuse ausgebildet ist. Die Bördelung 11 ist vorzugsweise in dem erfindungsgemäßen Verfahren aus einer in Richtung einer Längsachse L vorstehenden metallischen Kante 11a (in Strichlinien angedeutet in Fig. 2) erzeugt worden. Die Kante 11a hat beispielsweise als Verjüngung, als Fase oder ringförmiger Vorsprung, vorgelegen. Vorzugsweise wird die Kante 11a in einem Umformvorgang mittels eines Bördelwerkzeugs in Richtung des Fensterelements 5 umgebogen. Besonders bevorzugt wird die Kante 11a mittels Kaltverformung umgebogen.

Der Sitz 13 ist in dieser Ausführung vorzugsweise als umlaufender Auflagesteg im Inneren des Gehäusekörpers 1 angeordnet. Weiterhin zeigt Figur 2 die Ausgestaltung des Gehäuses mit der Anordnung eines elastischen Dichtungselements 12 zwischen dem Sitz 13 und der ersten Seite 7 des Fensterelements 5. Die zusätzliche oder ausschließliche Anordnung des elastischen Dichtungselements 12 zwischen der Bördelung 11 und der zweiten Seite 6 des Fensterelements 5 für weitere vorteilhafte Ausführungen ist nicht dargestellt. Hierbei werden mittels der Bördelung 11 der Gehäusekörper 1, das Fensterelement 5 und das Dichtungselemente 12 staubdicht, sowie vorzugsweise wasser- und luftdicht, miteinander in Anlage gehalten.

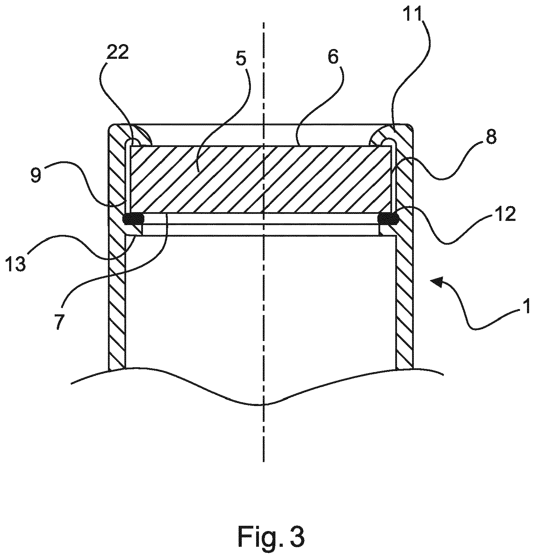

Die Figur 3 stellt einen Ausschnitt des explosionsgeschützten Gehäuses entsprechend dem zweiten Aspekt der Erfindung dar. Das Fensterelement 5 weist eine Umfangsfläche 8 auf, die sich von der ersten Seite 7 zur zweiten Seite 6 des Fensterelements 5 erstreckt, und mittels eines elastischen Haftmittels 22 am Gehäuse befestigt ist. Das elastische Haftmittel 22 ist zwischen der ersten Seite 7 des Fensterelements 5 und einem im Inneren des Gehäusekörpers 1 ausgebildeten Sitz 13, und zwischen der Umfangsfläche 8 und einer inneren Gehäusewandung des Gehäusekörpers 1 angeordnet. Das Fensterelement 5 und das elastische Haftmittel 22 verschließen das Gehäuse staubdicht, sowie vorzugsweise wasser- und luftdicht.

Das Gehäuse nach Fig. 1 ist insbesondere als druckfestes Gehäuse und/oder als staubdichtes Gehäuse ausgebildet. Hierzu ist ein Spalt 9, wie in Fig. 2, der zwischen einer inneren Wandung bzw. Innenwand 10 des Gehäusekörpers 1 im Bereich des Fensterelements 5 und dem Fensterelement 5 gebildet wird, zünddurchschlagsicher ausgebildet. Vorzugsweise weist das erfindungsgemäße Gehäuse ein freies Innenvolumen von 35 bis 45 cm³ auf. Der Spalt 9 weist vorzugsweise eine Mindestlänge von 6 mm und eine maximale Spaltweite von 0,1 mm auf. Das Fensterelement 5 ist als zylindrische Scheibe ausgebildet und weist eine zylindrische Umfangsfläche auf und der Gehäusekörper 1 entsprechend eine korrespondierend ausgebildete zylindrisch geformte Ausnehmung zur Aufnahme des Fensterelements 5.

Wie in Figur 1 dargestellt, ist der Gehäusekörper 1 vorzugsweise zweiteilig ausgebildet. Der Gehäusekörper 1 weist ein erstes Gehäuseteil 3 und ein zweites Gehäuseteil 4 auf, welche vorzugsweise aus Edelstahl ausgebildet sind. Im ersten Gehäuseteil 3 ist das Fensterelement 5 angeordnet. Das zweite Gehäuseteil 4 ist zur Aufnahme der Sende- bzw. Empfangsmittel 2 für elektromagnetische Strahlung ausgebildet, wobei diese vorzugsweise eine Sensoreinheit 14 und Sensorsignalauswerteeinheit 15 umfassen.

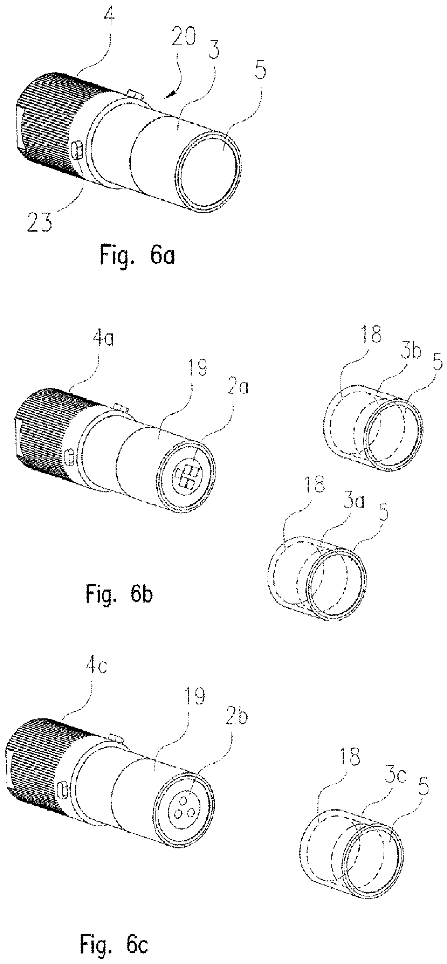

Das erste Gehäuseteil 3 ist, wie in Fig. 1 und Fig. 6a dargestellt, vorzugsweise mittels einer zünddurchschlagssicheren Verbindung 20 (Fig. 6a) reversibel lösbar mit dem zweiten Gehäuseteil 4 verbunden ist. Die beiden Gehäuseteile 3, 4 in voneinander gelöstem Zustand sind in Fig. 6b und 6c dargestellt.

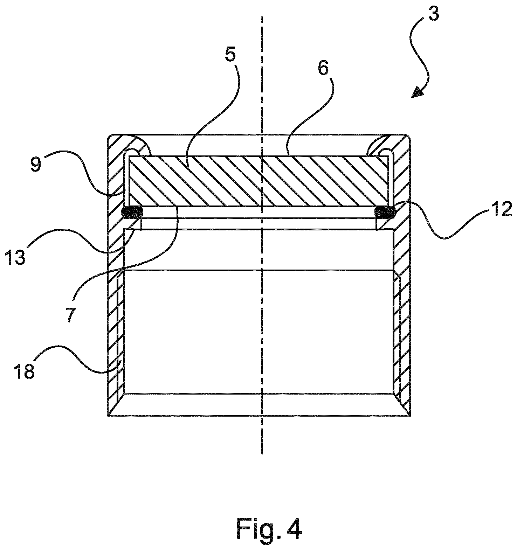

Die zünddurchschlagsichere Verbindung 20 wird durch ein erstes Verbindungselement 18, in Fig. 4 u. Fig. 6b als ein Innengewinde am ersten Gehäuseteil 3, und als ein korrespondierendes zweites Verbindungselement 19, hier ein Außengewinde am zweiten Gehäuseteil 4 gebildet. Das erste Gehäuseteil 3 und das zweite Gehäuseteil 4 haben eine kantenfreie, zylindrische Außenfläche. Dies erfordert zum Öffnen des Gehäuses ein Spezialwerkzeug.

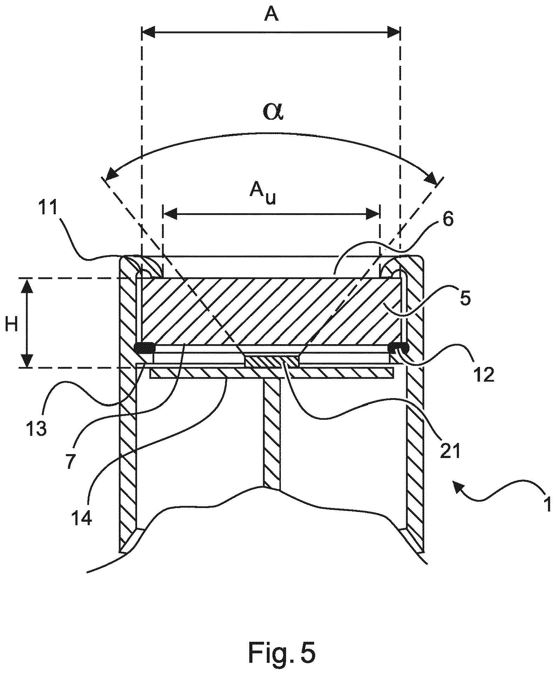

Figur 5 stellt eine weitere bevorzugte Ausführungsform dar. Der Gehäusekörper 1 weist im Bereich des Fensterelements 5 einen zylindrischen Querschnitt mit einer Querschnittsfläche A auf. Die von der Bördelung 11 des Fensterelements 5 unverdeckte Fensterfläche A_{U} ist so gewählt, dass sie 80% oder mehr der Querschnittsfläche A beträgt. Somit wird ein großer Öffnungswinkel α von vorzugsweise mehr als 90 Grad realisiert und eine kompakte Bauform ermöglicht. Die Sensoreinheit 14 mit dem Sensorelement 21 ist in der von der zweiten Seite 6 des Fensterelements 5 um H beabstandeten Empfangsebene angeordnet.

In der Ausführungsform gemäß Figur 5 sind die Sensoreinheit 14 und die Sensorsignalauswerteeinheit 15 (nicht dargestellt) dazu eingerichtet, Funken und/oder Flammen zu detektieren. Die Sensoreinheit 14 ist zu diesem Zweck dazu eingerichtet, elektromagnetische Strahlung im Bereich von 0,15 µm bis 15 µm zu detektieren.

Vorzugsweise ist das Fensterelement 5 entsprechend durchlässig für elektromagnetische Strahlung im Wellenlängenbereich von 1 µm bis 6 µm und besteht vorzugsweise aus Saphir.

In Figur 6 (6a bis 6c) ist schematisch der dritte Aspekt der Erfindung, ein explosionsgeschütztes Gehäuse-Kit dargestellt. Es umfasst in dieser Ausführung ein oder mehrerer explosionsgeschützte Gehäuse in zweiteiliger Ausführung des Gehäusekörpers 1 mit einem ersten Gehäuseteil 3 und einem zweiten Gehäuseteil 4, welche mittels der zünddurchschlagssicheren Verbindung 20 (s. Fig. 1 und Fig. 6a) reversibel lösbar miteinander verbunden sind. Das Gehäuse-Kit umfasst ferner mehrere als Wechseloptik ausgebildete erste Gehäuseteile 3, die in diesem modularen Konzept bereitgehalten werden. In Fig. 6a bis 6c sind exemplarisch drei hiervon Gehäuseteile 3a, 3b und 3c dargestellt. Die ersten Gehäuseteile 3a und 3b weisen ein baugleiches Fensterelement 5, mit gleichen Transmissionseigenschaften für elektromagnetische Strahlung auf. Bei Verschmutzung oder Verschleiß kann die Wechseloptik 3a gegen die Wechseloptik 3b getauscht werden, da die zünddurchschlagsichere Verbindung 20 reversibel lösbar ist. Somit kann schnell und flexibel die Wechseloptik getauscht werden, bei Beibehaltung der Ausbildung des Gehäuses als druckfestes Gehäuse und/oder staubdichtes Gehäuse.

Vorzugsweise werden auch Gehäuseteile 3c mit jeweils zu den Übrigen Gehäuseteilen unterschiedlich ausgebildeten Fensterelementen als Wechseloptiken bereitgehalten. Das explosionsgeschützte Gehäuse-Kit umfasst ferner vorzugsweise mehrere zweite Gehäuseteile 4, in der dargestellten Ausführung sind nur 4a und 4c dargestellt (s. Fig. 6a bis 6c). Diese weisen vorzugsweise zu den übrigen Gehäuseteilen 4 unterschiedlich ausgebildete, Sende- bzw. Empfangsmittel 2, hier vorzugsweise 2a (s. Fig. 6b) und 2b (s. Fig. 6c) für elektromagnetische Strahlung auf. Auch diese Gehäuseteile 4, 4a, 4c lassen sich mittels der reversibel lösbaren zünddurchschlagssicheren Verbindung 20 (s. Fig. 1 und Fig. 6a) bei Bedarf austauschen bzw. durch die Messaufgabe bedingt bereits bei der Installation mit den zugehörigen ersten Gehäuseteilen 3, 3a, 3c kombinieren. Die Gehäuseteile 4, z. B. 4a und 4c werden in diesem modularen Konzept als Wechselsendeeinheiten und/oder Wechselempfangseinheiten bereitgehalten.

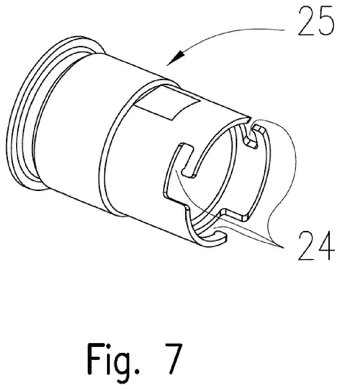

In Fig. 6a ist eine weitere bevorzugte Ausführung des Gehäuses dargestellt. An dem Gehäusekörper 1, insbesondere am zweiten Gehäuseteil 4 des Gehäusekörpers 1 ist eine Anzahl von Vorsprüngen 23 ausgebildet. Im gezeigten Ausführungsbeispiel sind insgesamt drei Vorsprünge 23 gleichmäßig über den Umfang des Gehäusekörpers 1 bzw. des zweiten Gehäuseteils 4 verteilt. Die Vorsprünge 23 sind zum Eingriff in korrespondierende Kulissenführungen 24 eines Bajonettverschlusses angepasst. Mit Hilfe der Vorsprünge 23 lässt sich das Gehäuse effizient verliersicher in einer dafür vorgesehenen Aufnahme 25, wie in Fig. 7 dargestellt, installieren, wobei die Aufnahme 25 die Kulissenführungen 24 für die Vorsprünge 23 aufweist. Alternativ ist die Anzahl Vorsprünge 23 in anderen bevorzugten Ausführungsformen am ersten Gehäuseteil 3 (nicht dargestellt) ausgebildet. Ebenso kann ein einteiliger Gehäusekörper 1 eine entsprechende Anzahl von Vorsprüngen 23 an seiner Umfangsfläche aufweisen. In einer bevorzugten Ausführung wird die Aufnahme 25 an dem zu schützenden Objekt derart befestigt und auf den zu schützenden Bereich ausgerichtet, dass nach Einführung des Gehäusekörpers 1 in die Aufnahme 25 der Öffnungswinkel α den zu schützenden Bereich erfasst.

Wie sich aus den vorstehenden Ausführungen ergibt, ist mit der vorliegenden Erfindung ein explosionsgeschütztes Gehäuse für Mittel zum Senden und/oder Empfangen elektromagnetischer Strahlung sowie ein Gehäuse-Kit vorgestellt worden. Die Einfachheit der zünddurchschlagsicheren Verbindung des Fensterelements mit dem Gehäuse, sowie die Standardisierung der ersten und zweiten Gehäuseteile, welche zum flexiblen kombinieren und zum schnellen und flexiblen Austauschen bei Wartungs- und Servicearbeiten ausgebildet sind, ermöglichen eine Kostenreduzierung in der Herstellung der Komponenten und deutlich verminderten Aufwand für Wartung und Service, ohne die Schutzfunktion des Gehäuses zu kompromittieren.

### Bezuqszeichenliste

- 1: Gehäusekörper
- 2, 2a, 2b: Sende- und/oder Empfangsmittel für elektromagnetische Strahlung
- 3, 3a, 3b, 3c: erstes Gehäuseteil, vorzugsweise als Wechseloptik ausgebildet
- 4, 4a, 4c: zweites Gehäuseteil
- 5: Fensterelement
- 6: Zweite Seite des Fensterelements (dem Gehäuseinneren abgewandt)
- 7: Erste Seite des Fensterelements (dem Gehäuseinneren zugewandt)
- 8: Umfangsfläche, vorzugsweise zylindrische Mantelfläche des Fensterelements 5
- 9: Spalt
- 10: innere Wandung bzw. Innenwand des Gehäusekörpers 1
- 11: Bördelung
- 11a: metallische Kante
- 12: elastisches Dichtungselement
- 13: Sitz
- 14: Sensoreinheit
- 15: Sensorsignalauswerteeinheit
- 18: Erstes Verbindungselement
- 19: Zweites Verbindungselement
- 20: Zünddurchschlagsichere Verbindung des ersten Gehäuseteils (3, 3a, 3b, 3c) mit dem zweiten Gehäuseteil (4, 4a, 4c)
- 21: Sensorelement und/oder Sensorarray
- 22: Elastisches Haftmittel
- 23: Vorsprünge am Gehäusekörper
- A: Querschnittsfläche des Gehäusekörpers 1 im Bereich des Fensterelements 5
- A_{U}: Freie unverdeckte Fläche des Fensterelements 5
- L: Längsachse

## Patentansprüche

1. Explosionsgeschütztes Gehäuse für Mittel zum Senden und/oder Empfangen elektromagnetischer Strahlung (2, 2a, 2b), mit
- einem Gehäusekörper (1), der zur Aufnahme solcher Sende- und/oder Empfangsmittel (2, 2a, 2b) eingerichtet ist, und
- einem Fensterelement (5) mit einer ersten, dem Gehäuseinneren zugewandten Seite (7) und einer gegenüberliegenden zweiten, dem Gehäuseinneren abgewandten Seite (6), wobei das Fensterelement (5) gegenüber elektromagnetischer Strahlung durchlässig ist, **dadurch gekennzeichnet, dass**
der Gehäusekörper (1) auf der zweiten Seite (6) des Fensterelements (5) eine Bördelung (11) aufweist, welche durch mechanisches Umbiegen einer am Gehäusekörper (1) vorgesehenen Metallkante nach Einsetzen des Fensterelementes in den Gehäusekörper (1) erzeugt wird, und das Fensterelement (5) in Richtung eines im Inneren des Gehäuses ausgebildeten Sitzes (13) drückt, so dass das Gehäuse als druckfestes, explosionsgeschütztes Gehäuse ausgebildet ist.

2. Gehäuse nach Anspruch 1,
wobei zwischen dem Sitz (13) und der ersten Seite (7) des Fensterelements (5) und/oder zwischen der Bördelung (11) und der zweiten Seite (6) des Fensterelements (5) ein elastisches Dichtungselement (12) angeordnet ist,
wobei der Gehäusekörper (1), das Fensterelement (5), und das oder die Dichtungselemente (12) mittels der Bördelung (11) staubdicht, sowie vorzugsweise wasser- und/oder luftdicht, miteinander in Anlage gehalten werden.

3. Gehäuse nach Anspruch 1,
**dadurch gekennzeichnet, dass**
das Fensterelement (5) eine Umfangsfläche (8) aufweist, die sich von der ersten Seite (7) zur zweiten Seite (6) erstreckt, und mittels eines elastischen Haftmittels (22) am Gehäuse befestigt ist, wobei
das elastische Haftmittel (22) zwischen der ersten Seite (7) des Fensterelements (5) und einem im Inneren des Gehäusekörpers (1) ausgebildeten Sitz (13), und zwischen der Umfangsfläche (8) und einer inneren Wandung (10) des Gehäusekörpers (1) angeordnet ist, und
das Fensterelement (5) und das elastische Haftmittel (22) das Gehäuse staubdicht, sowie vorzugsweise wasser- und luftdicht, verschließen.

4. Gehäuse nach einem der vorstehenden Ansprüche,
wobei der Gehäusekörper (1) eine Innenwand (10) im Bereich des Fensterelements (5) aufweist, und zwischen dem Fensterelement (5) und der Innenwand (10) ein Spalt (9) zünddurchschlagsicher ausgebildet ist.

5. Gehäuse nach einem der vorstehenden Ansprüche,
wobei das Fensterelement (5) eine zylindrische Umfangfläche (8) aufweist, und der Gehäusekörper (1) eine korrespondierend ausgebildete Ausnehmung zur Aufnahme des Fensterelements (5) aufweist.

6. Gehäuse nach einem der vorstehenden Ansprüche,
wobei der Gehäusekörper (1) ein erstes Gehäuseteil (3, 3a, 3b, 3c) und ein zweites Gehäuseteil (4, 4a, 4c) aufweist, wobei das erste Gehäuseteil (3, 3a, 3b, 3c) das Fensterelement (5) umfasst, und das zweite Gehäuseteil (4, 4a, 4c) zur Aufnahme der Sende- bzw. Empfangsmittel (2) ausgebildet ist,
wobei vorzugsweise das erste Gehäuseteil (3, 3a, 3b, 3c) mittels einer zünddurchschlagssicheren Verbindung (20) reversibel lösbar mit dem zweiten Gehäuseteil (4, 4a, 4c) verbunden ist.

7. Gehäuse nach Anspruch 6,
wobei die zünddurchschlagsichere Verbindung (20) ein erstes Verbindungselement (18), vorzugsweise ein Innen- oder Außengewinde, an dem ersten Gehäuseteil (3, 3a, 3b, 3c) und ein korrespondierendes zweites Verbindungselement (19), vorzugsweise ein Außenoder Innengewinde, an dem zweiten Gehäuseteil (4, 4a, 4c) aufweist.

8. Gehäuse nach einem der Ansprüche 6 oder 7,
wobei das erste Gehäuseteil (3, 3a, 3b, 3c) und/oder das zweite Gehäuseteil (4, 4a, 4c) eine kantenfreie, vorzugsweise zylindrische Außenfläche haben.

9. Gehäuse nach einem der vorstehenden Ansprüche,
wobei der Körper des ersten Gehäuseteils (3, 3a, 3b, 3c) und/oder des zweiten Gehäuseteils (4, 4a, 4c) aus einem der folgenden Materialien besteht: Metall, vorzugsweise Edelstahl, Keramik, Kunststoff, faserverstärktem Kunststoff, vorzugsweise CFK oder GFK, oder aus einer Kombination mehrerer dieser Materialien.

10. Gehäuse nach einem der vorstehenden Ansprüche,
wobei das Fensterelement (5) durchlässig für elektromagnetische Strahlung im Wellenlängenbereich von 0,15 µm bis 15 µm oder im Bereich von 1 µm bis 6 µm ist, und vorzugsweise aus Saphir, Kunststoff, Borosilikatglas, insbesondere Borosilikat-Kronglas mit Brechungsindex 7, eingefärbtem Glas, Silizium, oder Quarzglas, oder einer Kombination aus mehreren dieser Materialien ausgebildet ist.

11. Gehäuse nach einem der vorstehenden Ansprüche,
wobei der Gehäusekörper (1) im Bereich des Fensterelements (5) einen zylindrischen Querschnitt mit einer Querschnittsfläche (A) aufweist, und eine von der Bördelung (11) des Fensterelements (5) unverdeckte Fensterfläche (AU) 80% oder mehr der Querschnittsfläche (A) beträgt.

12. Explosionsgeschütztes Gehäuse-Kit, mit
- einem Gehäuse nach einem der Ansprüche 6 bis 11,
- einem oder mehreren weiteren ersten Gehäuseteilen (3, 3a, 3b, 3c), die als Wechseloptiken bereitgehalten werden und vorzugsweise jeweils zu den Übrigen unterschiedlich ausgebildete Fensterelemente aufweisen, und/oder
- einem oder mehreren weiteren zweiten Gehäuseteilen (4, 4a, 4c), die jeweils, vorzugsweise zu den Übrigen unterschiedlich ausgebildete, Sende- bzw. Empfangsmittel (2, 2a, 2b) für elektromagnetische Strahlung aufweisen und als Wechselsendeeinheiten und/oder Wechselempfangseinheiten bereitgehalten werden.

13. Verfahren zur Herstellung eines explosionsgeschützten Gehäuses oder Teils eines Gehäuses für Mittel zum Senden und/oder Empfangen elektromagnetischer Strahlung (2, 2a, 2b) nach Anspruch 1, umfassend die Schritte:
- Herstellen oder Bereitstellen eines Gehäusekörpers (1), der eine Längsachse (L), ein Gehäuseinneres zur Aufnahme solcher Sende und/oder Empfangsmittel (2, 2a, 2b), einen im Inneren des Gehäusekörpers (1) ausgebildeten Sitz (13) für ein Fensterelement (5), und eine in Richtung der Längsachse vom Gehäusekörper (1) vorstehende metallische Kante aufweist, insbesondere ausgebildet als Fase oder ringförmiger Vorsprung,
- Herstellen oder Bereitstellen eines Fensterelements (5),
- Einsetzen des Fensterelements (5) in das Innere des Gehäusekörpers (1) an der Seite des Sitzes (13), und
- Bördeln der metallischen Kante durch mechanisches Umbiegen einer am Gehäusekörper (1) vorgesehenen Metallkante derart, dass die gebördelte Kante das Fensterelement gegen den Sitz (13) im Inneren des Gehäusekörpers (1) drückt.

14. Verfahren nach Anspruch 13 zur Herstellung eines explosionsgeschützten Gehäuses nach Anspruch 2,
wobei vordem Einsetzen des Fensterelements (5) in das Innere des Gehäusekörpers (1) ein, vorzugsweise elastisches, Dichtelement (12) an der Seite des Sitzes (13) eingesetzt wird, und wobei das Dichtelement (12) mittels des Bördelns in dichtende Anlage mit dem Sitz (13) einerseits und dem Fensterelement (5) andererseits gebracht wird.

## Claims

1. An explosion-protected housing for means for transmitting and/or receiving electromagnetic radiation (2, 2a, 2b), having
- a housing body (1) that is configured to receive such transmission and/or reception means (2, 2a, 2b) and
- a window element (5) having a first side (7) that faces the housing interior and an opposite second side (6) that faces away from the housing interior, wherein the window element (5) transmits electromagnetic radiation,
**characterized in that** the housing body (1) has a flanging (11) on the second side (6) of the window element (5), said flange is produced by mechanically bending a metal edge provided on the housing body (1) after insertion of the window element into the housing body (1) and pressing the window element (5) in the direction of a seat (13) that is formed in the interior of the housing such that the housing is formed as a pressure-resistant, explosion-protected housing.

2. The housing as claimed in claim 1, wherein an elastic sealing element (12) is arranged between the seat (13) and the first side (7) of the window element (5) and/or between the flanging (11) and the second side (6) of the window element (5), wherein the housing body (1), the window element (5) and the sealing element or elements (12) are kept in contact with one another in a dust-tight fashion, and preferably in a watertight and/or airtight fashion, by means of the flanging (11).

3. The housing as claimed in the preamble of claim 1 or as claimed in claim 1, **characterized in that** the window element (5) has a circumferential area (8) that extends from the first side (7) to the second side (6) and that is fastened to the housing by means of an elastic adhesive (22), wherein the elastic adhesive (22) is arranged between the first side (7) of the window element (5) and a seat (13) that is formed in the interior of the housing body (1), and between the circumferential area (8) and an inner wall (10) of the housing body (1), and the window element (5) and the elastic adhesive (22) seal the housing in a dust-tight fashion, and preferably in a watertight and airtight fashion.

4. The housing as claimed in any one of the preceding claims, wherein the housing body (1) has an inner wall (10) in the region of the window element (5), and a joint (9) is formed in flameproof fashion between the window element (5) and the inner wall (10).

5. The housing as claimed in any one of the preceding claims, wherein the window element (5) has a cylindrical circumferential area (8) and the housing body (1) has a correspondingly formed recess for receiving the window element (5).

6. The housing as claimed in any one of the preceding claims, wherein the housing body (1) has a first housing part (3, 3a, 3b, 3c) and a second housing part (4, 4a, 4c), wherein the first housing part (3, 3a, 3b, 3c) comprises the window element (5) and the second housing part (4, 4a, 4c) is configured to receive the transmission and/or reception means (2),
wherein preferably the first housing part (3, 3a, 3b, 3c) is reversibly detachably connected to the second housing part (4, 4a, 4c) by means of an flameproof connection (20).

7. The housing as claimed in claim 6, wherein the flameproof connection (20) has a first connecting element (18), preferably a female or male thread, at the first housing part (3, 3a, 3b, 3c) and a corresponding second connecting element (19), preferably a male or female thread, at the second housing part (4, 4a, 4c).

8. The housing as claimed in any one of claims 6 or 7, wherein the first housing part (3, 3a, 3b, 3c) and/or the second housing part (4, 4a, 4c) have an edge-free, preferably cylindrical, outer face.

9. The housing as claimed in any one of the preceding claims, wherein the body of the first housing part (3, 3a, 3b, 3c) and/or of the second housing part (4, 4a, 4c) consists of one of the following materials: metal, preferably stainless steel, ceramic, polymer, fiber-reinforced polymer, preferably CFRP or GFRP, or of a combination of a plurality of these materials.

10. The housing as claimed in any one of the preceding claims, wherein the window element (5) transmits electromagnetic radiation in the wavelength range from 0.15 µm to 15 µm or in the range of 1 µm to 6 µm and is formed, preferably, from sapphire, polymer, borosilicate glass, in particular borosilicate crown glass with a refractive index of 7, stained glass, silicon, or quartz glass, or a combination of a plurality of these materials.

11. The housing as claimed in any one of the preceding claims, wherein the housing body (1) has a cylindrical cross section with a cross-sectional area (A) in the region of the window element (5), and a window area (Au) that is not covered by the flanging (11) of the window element (5) is 80% or more of the cross-sectional area (A).

12. An explosion-protected housing kit, having
- a housing as claimed in any one of claims 6 to 11,
- one or more further first housing parts (3, 3a, 3b, 3c), which are kept available as interchange optics and which preferably each have window elements that are distinct from the others, respectively, and/or
- one or more further second housing parts (4, 4a, 4c) which each have transmission and/or reception means (2, 2a, 2b) for electromagnetic radiation from the others, and which are kept available as interchange transmission units and/or interchange reception units.

13. A method for producing an explosion-protected housing or part of a housing for means for transmitting and/or receiving electromagnetic radiation (2, 2a, 2b) as claimed in claim 1, including the steps of:
- producing or providing a housing body (1) that has a longitudinal axis (L), a housing interior for receiving such transmission and/or reception means (2, 2a, 2b), a seat (13), formed in the interior of the housing body (1), for a window element (5) and a metallic edge which protrudes from the housing body (1) in the direction of the longitudinal axis and which is formed, in particular, as a bevel or ring-shaped projection,
- producing or providing a window element (5),
- inserting the window element (5) into the interior of the housing body (1) at the side of the seat (13), and
- flanging the metallic edge by mechanically bending a metal edge provided on the housing body (1) in such a way that the flanged edge presses the window element against the seat (13) in the interior of the housing body (1).

14. The method as claimed in claim 13 for producing an explosion-protected housing as claimed in claim 2,
wherein a sealing element (12), preferably an elastic sealing element, is inserted at the side of the seat (13) prior to the insertion of the window element (5) into the interior of the housing body (1) and wherein the sealing element (12) is brought into sealing abutment with the seat (13) on the one hand and the window element (5) on the other hand by means of the step of flanging.

## Revendications

1. Boîtier protégé contre les explosions pour des moyens d'émission et/ou de réception de rayonnement électromagnétique (2, 2a, 2b), avec
- un boîtier (1), qui est conçu pour loger de tels moyens d'émission et/ou de réception (2, 2a, 2b), et
- un élément de fenêtre (5) avec une première face (7) tournée vers l'intérieur du boîtier et une deuxième face (6) située en regard de la première face et opposée à l'intérieur du boîtier, dans lequel l'élément de fenêtre (5) est perméable au rayonnement électromagnétique, **caractérisé en ce que**
le boîtier (1) comprend sur la deuxième face (6) de l'élément de fenêtre (5) un bord rabattu (11) qui est réalisé par un repliage mécanique d'une arête métallique prévue sur le boîtier (1) après la pose de l'élément de fenêtre dans le boîtier (1), et l'élément de fenêtre (5) exerce une pression en direction d'un siège (13) formé à l'intérieur du boîtier de sorte que le boîtier est formé en tant que boîtier protégé contre les explosions à l'épreuve de la pression.

2. Boîtier selon la revendication 1,
dans lequel entre le siège (13) et la première face (7) de l'élément de fenêtre (5) et/ou entre le bord rabattu (11) et la deuxième face (6) de l'élément de fenêtre (5) est disposé un élément d'étanchéité (12) élastique,
dans lequel le boîtier (1), l'élément de fenêtre (5) et le ou les éléments d'étanchéité (12) sont maintenus en position entre eux au moyen du bord rabattu (11) étanches aux poussières ainsi que, de préférence, étanches à l'eau et/ou à l'air.

3. Boîtier selon la revendication 1,
**caractérisé en ce que**
l'élément de fenêtre (5) comprend une surface circonférentielle (8), qui s'étend de la première face (7) à la deuxième face (6) et qui est fixée au boîtier au moyen d'un moyen d'adhérence élastique (22), dans lequel
le moyen d'adhérence élastique (22) est disposé entre la première face (7) de l'élément de fenêtre (5) et un siège (13) formé à l'intérieur du boîtier (1), et entre la surface circonférentielle (8) et une paroi interne (10) du boîtier (1), et
l'élément de fenêtre (5) et le moyen d'adhérence élastique (22) ferment le boîtier de manière étanche aux poussières ainsi que, de préférence de manière étanche à l'eau et/ou à l'air.

4. Boîtier selon l'une quelconque des revendications précédentes,
dans lequel le boîtier (1) comprend une paroi interne (10) au niveau de l'élément de fenêtre (5) et entre l'élément de fenêtre (5) et la paroi interne (10) est formé un interstice (9) résistant aux chocs explosifs.

5. Boîtier selon l'une quelconque des revendications précédentes,
dans lequel l'élément de fenêtre (5) comprend une surface circonférentielle cylindrique (8), et le boîtier (1) comprend un évidement formé de manière correspondante pour loger l'élément de fenêtre (5).

6. Boîtier selon l'une quelconque des revendications précédentes,
dans lequel le boîtier (1) comprend une première partie de boîtier (3, 3a, 3b, 3c) et une deuxième partie de boîtier (4, 4a, 4c), dans lequel la première partie de boîtier (3, 3a, 3b, 3c) comprend l'élément de fenêtre (5) et la deuxième partie de boîtier (4, 4a, 4c) est formée pour loger les moyens d'émission et/ou de réception (2),
dans lequel, de préférence, la première partie de boîtier (3, 3a, 3b, 3c) est reliée de manière réversiblement détachable à la deuxième partie de boîtier (4, 4a, 4c) au moyen d'une liaison résistante aux chocs explosifs (20).

7. Boîtier selon la revendication 6,
dans lequel la liaison résistante aux chocs explosifs (20) comprend un premier élément de liaison (18), de préférence un filetage interne ou externe, au niveau de la première partie de boîtier (3, 3a, 3b, 3c) et un deuxième élément de liaison (19) correspondant, de préférence un filetage externe ou interne, au niveau de la deuxième partie de boîtier (4, 4a, 4c).

8. Boîtier selon l'une quelconque des revendications 6 ou 7,
dans lequel la première partie de boîtier (3, 3a, 3b, 3c) et/ou la deuxième partie de boîtier (4, 4a, 4c) ont une surface externe sans arête, de préférence cylindrique.

9. Boîtier selon l'une quelconque des revendications précédentes,
dans lequel le corps de la première partie de boîtier (3, 3a, 3b, 3c) et/ou de la deuxième partie de boîtier (4, 4a, 4c) se compose d'un des matériaux suivants : du métal, de préférence de l'acier inoxydable, de la céramique, de la matière synthétique, de la matière synthétique renforcée par des fibres, de préférence CFK ou GFK, ou d'une combinaison de plusieurs de ces matériaux.

10. Boîtier selon l'une quelconque des revendications précédentes,
dans lequel l'élément de fenêtre (5) est perméable à un rayonnement électromagnétique dans la plage de longueurs d'onde de 0,15 µm à 15 µm ou dans la plage de 1 µm à 6 µm, et est, de préférence, composé de saphir, de matière synthétique, de verre borosilicaté, en particulier de verre à couronne borosilicaté avec un indice de réfraction 7, du verre coloré, du silicium ou du verre de quartz, ou d'une combinaison de plusieurs de ces matériaux.

11. Boîtier selon l'une quelconque des revendications précédentes,
dans lequel le boîtier (1) présente au niveau de l'élément de fenêtre (5) une section cylindrique avec une surface transversale (A), et une surface de fenêtre (AU) non recouverte par le bord rabattu (11) de l'élément de fenêtre (5) occupe 80 % ou plus de la surface transversale (A).

12. Kit de boîtier protégé contre les explosions, avec
- un boîtier selon l'une quelconque des revendications 6 à 11,
- une ou plusieurs autres premières parties de boîtier (3, 3a, 3b, 3c) qui sont tenues prêtes en tant qu'optiques de rechange et, de préférence, comprennent chacune des éléments de fenêtre formés différemment les uns des autres, et/ou
- une ou plusieurs autres deuxièmes parties de boîtier (4, 4a, 4c) qui comprennent chacune, de préférence, des moyens d'émission et/ou de réception (2, 2a, 2b) formés différemment les uns des autres, pour un rayonnement électromagnétique et sont tenues prêtes en tant qu'unités d'émission de rechange et/ou unités de réception de rechange.

13. Procédé de fabrication d'un boîtier protégé contre les explosions ou d'une partie d'un boîtier pour des moyens d'émission et/ou de réception d'un rayonnement électromagnétique (2, 2a, 2b) selon la revendication 1, comportant les étapes :
- la fabrication ou l'utilisation d'un boîtier (1), qui comprend un axe longitudinal (L), un intérieur de boîtier pour loger de tels moyens d'émission et/ou de réception (2, 2a, 2b), un siège (13), formé à l'intérieur du boîtier (1) pour un élément de fenêtre (5), et une arête métallique s'avançant en direction de l'axe longitudinal depuis le boîtier (1), en particulier formée en tant que chanfrein ou saillie de forme annulaire,
- la fabrication ou l'utilisation d'un élément de fenêtre (5),
- la pose de l'élément de fenêtre (5) à l'intérieur du boîtier (1) au niveau de la face du siège (13), et
- le rabattement de l'arête métallique par un repliage mécanique d'une arête métallique prévue au niveau du boîtier (1) de manière que l'arête rabattue presse l'élément de fenêtre contre le siège (13) à l'intérieur du boîtier (1).

14. Procédé selon la revendication 13 pour la fabrication d'un boîtier protégé contre les explosions selon la revendication 2,
dans lequel avant la pose de l'élément de fenêtre (5) à l'intérieur du boîtier (1), un élément d'étanchéité (12), de préférence élastique, est posé contre la face du siège (13), et dans lequel l'élément d'étanchéité (12) est mis, au moyen du bord rabattu, en position étanche d'un côté avec le siège (13) et d'un autre côté avec l'élément de fenêtre (5).
